(19) Europäisches Patentamt
European Patent Office
Office européen des brevets

(11) EP 4 749 745 A1

(12) EUROPEAN PATENT APPLICATION

(43) Date of publication:
**27.05.2026 Bulletin 2026/22**

(21) Application number: **25215700.3**

(22) Date of filing: **13.11.2025**

(51) International Patent Classification (IPC):
***H01M 10/0567*** *(2010.01)* ***H01M 10/0569*** *(2010.01)*
***H01M 50/105*** *(2021.01)* ***H01M 50/42*** *(2021.01)*
***H01M 50/443*** *(2021.01)* ***H01M 50/446*** *(2021.01)*
***H01M 50/449*** *(2021.01)*

(52) Cooperative Patent Classification (CPC):
**H01M 50/449; H01M 10/0567; H01M 10/0569; H01M 50/105; H01M 50/42; H01M 50/443; H01M 50/446;** H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.11.2024 KR 20240163686**

(71) Applicant: **Samsung SDI Co., Ltd.**
**Gyeonggi-do (KR)**

(72) Inventors:
- **Lee, Jung Seong**
  **16678 Suwon-si, Gyeonggi-do (KR)**
- **Choi, Hyeon Seon**
  **16678 Suwon-si, Gyeonggi-do (KR)**
- **Jo, Jung Mo**
  **16678 Suwon-si, Gyeonggi-do (KR)**
- **Lee, Sang Heon**
  **16678 Suwon-si, Gyeonggi-do (KR)**
- **Kim, Cheon Soo**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) POUCH-TYPE RECHARGEABLE LITHIUM BATTERY

(57) Disclosed a pouch-type rechargeable lithium battery. The pouch-type rechargeable lithium battery includes an electrode assembly including a first electrode plate, a second electrode plate, and a separator interposed between the first electrode plate and the second electrode plate; and an electrolyte into which the electrode assembly is impregnated, wherein the separator includes a porous substrate and a coating layer disposed on at least one surface of the porous substrate. The coating layer includes a binder and a filler. The binder includes a (meth)acrylic binder including a first structural unit derived from (meth)acrylic acid, (meth)acrylate, or a salt thereof, a second structural unit derived from a hydroxyalkyl (meth)acrylate, and a third structural unit derived from (meth)acrylamidosulfonic acid or a salt thereof. The electrolyte has an ethyl propionate content in a range of 10% by volume to 40% by volume in a non-aqueous organic solvent.



Processed by Luminess, 75001 PARIS (FR)

## Description

BACKGROUND

### 1. Field of the Disclosure

The present disclosure relates to a pouch-type rechargeable lithium battery.

### 2. Discussion of Related Art

With increasing presence of electronic devices that use batteries such as, e.g., mobile phones, laptop computers, electric vehicles, and the like, the demand for rechargeable batteries with high energy density and high capacity is increasing. Accordingly, improving the performance of rechargeable lithium batteries may be advantageous.

A rechargeable lithium battery includes positive and negative electrodes that include an active material capable of intercalation and deintercalation of lithium ions, and an electrolyte, and produces electrical energy through oxidation and reduction reactions when the lithium ions are intercalated/deintercalated to/from the positive and negative electrodes.

The rechargeable lithium battery may include a separator interposed between the positive electrode and the negative electrode. The separator is impregnated into an electrolyte and is joined to the positive electrode or the negative electrode. Therefore, it may be desirable for the separator to have low thermal shrinkage and low film resistance in the electrolyte.

Pouch-type rechargeable lithium batteries are in a small stack/winding type. Therefore, the separator used in the pouch-type rechargeable lithium batteries may have higher adhesive strength to the positive or negative electrode compared to the separator used in the cylindrical, prismatic or coin-type rechargeable lithium batteries.

SUMMARY

The invention is defined by the appended claims. The description that follows is subjected to this limitation. Any disclosure lying outside the scope of said claims is only intended for illustrative as well as comparative purposes.

One example embodiment includes a pouch-type rechargeable lithium battery including a separator for a rechargeable lithium battery having low thermal shrinkage in an electrolyte and low film resistance, and high wet adhesive strength to a positive electrode or a negative electrode.

According to an aspect of the present disclosure, there is provided a pouch-type rechargeable lithium battery.

The pouch-type rechargeable lithium battery includes an electrode assembly including a first electrode plate, a second electrode plate, and a separator interposed between the first electrode plate and the second electrode plate, and an electrolyte into which the electrode assembly is impregnated, the separator includes a porous substrate; and a coating layer disposed on at least one surface of the porous substrate, the coating layer includes a binder; and a filler, the binder includes a (meth)acrylic binder including a first structural unit derived from (meth)acrylic acid, (meth)acrylate, or a salt thereof, a second structural unit derived from a hydroxyalkyl (meth)acrylate, and a third structural unit derived from (meth) acrylamidosulfonic acid or a salt thereof, and the electrolyte includes 10% by volume to 40% by volume of ethyl propionate in a non-aqueous organic solvent.

BRIEF DESCRIPTION OF THE DRAWINGS

The following drawings attached to the present specification are shown to illustrate example embodiments of the present disclosure and further describe aspects and features of the present disclosure together with the detailed description of the present disclosure. Thus, the present disclosure should not be construed as being limited to the drawings, in which:

FIG. 1 is a cross-sectional view schematically showing a pouch-type rechargeable lithium battery according to one example embodiment; and
FIG. 2 is a cross-sectional view showing a separator for a rechargeable lithium battery according to one example embodiment.

DETAILED DESCRIPTION

Hereinafter, example embodiments of the present disclosure are described in detail. However, it should be understood that these embodiments are presented as examples and are not intended to limit the present disclosure, and the present disclosure is only defined by the scope of the appended claims.

Unless otherwise particularly stated in the present specification, a case in which a part such as a layer, a film, a region, a plate, or the like is "on" another part includes not only a case in which the part is "directly on" the other part, but also a case in which there is another part interposed therebetween.

In the present specification, the term "combinations thereof" may refer to a mixture, a laminate, a composite, a copolymer, an alloy, a blend, and a reaction product of compositions.

In the present specification, the term "particle size (D50)" refers to an average particle size which represents the size of particles having a cumulative volume of 50% by volume in the particle size distribution. The particle size distribution may be measured using a method widely known to those skilled in the art. For example, the particle size distribution may be measured using a particle size analyzer, or may be measured using a transmission electron micrograph or a scanning electron micrograph. As an alternative method, the sizes of particles may be measured by a measuring device using dynamic light scattering, data analysis may be performed to count the number of particles for each particle size range, and the particle size (D50) may be calculated therefrom.

Unless otherwise stated, the D50 value is measured using a laser diffraction method. For example, when measured by the laser diffraction method, the particles to be measured are dispersed in a dispersion medium, introduced into a commercially available laser diffraction particle size measuring device (e.g., Microtrac MT 3000), and irradiated at an output of 60 W using ultrasonic waves of approximately 28 kHz. Thereafter, the D50 value is calculated based on 50% of the particle diameter distribution in the measuring device.

When the particle is spherical, the size is mean a diameter.

In the present specification, the term "(meth)acryl" refers to an acryl and/or methacryl.

Unless otherwise defined hereinafter, the term "substituted" means that hydrogen in a compound is replaced with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br or I), a hydroxy group (-OH), a nitro group ($-NO_2$), a cyano group (-CN), an amino group (-NRR') (where R and R' are each independently hydrogen or a C1 to C6 alkyl group), a sulfobetaine group ($-RR'N^+(CH_2)_nSO_3^-$ where n is a natural number from 1 to 10), a carboxybetaine group ($-RR'N^+(CH_2)_nCOO^-$ where n is a natural number from 1 to 10) (where R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R where R is hydrogen, a C1 to C6 alkyl group, a C1 to C6 alkoxy group, or a C6 to C12 aryl group), a carboxyl group (-COOH) or a salt thereof (-C(=O)OM where M is an organic or inorganic cation), a sulfonate group ($-SO_3H$) or a salt thereof ($-SO_3M$ wherein M is an organic or inorganic cation), and a phosphate group ($-PO_3H_2$) or a salt thereof ($-PO_3MH$ or $-PO_3M_2$ where M is an organic or inorganic cation).

Hereinafter, the C1 to C3 alkyl group is a methyl group, an ethyl group, or a propyl group. The C1 to C10 alkylene group may be, for example, a C1 to C6 alkylene group, a C1 to C5 alkylene group, or a C1 to C3 alkylene group, and may be, for example, a methylene group, an ethylene group, or a propylene group. The C3 to C20 cycloalkylene group may be, for example, a C3 to C10 cycloalkylene group, or a C5 to C10 cycloalkylene group, and may be, for example, a cyclohexylene group. The C6 to C20 arylene group may be, for example, a C6 to C10 arylene group, and may be, for example, a phenylene group. The C3 to C20 heterocyclic group may be, for example, a C3 to C10 heterocyclic group, and may be, for example, a pyridine group.

Hereinafter, the term "hetero" means that a compound contains one or more heteroatoms such as or including at least one of N, O, S, Si, and P.

In chemical formulas, the symbol "*" indicates a part that is connected to the same or different atom, group, or structural unit. Unless specifically stated otherwise in the chemical formulas described herein, it can be presumed that hydrogen is bonded in the structure of the chemical formula.

Hereinafter, the term "alkali metal" refers to an element belonging to Group 1 of the periodic table, such as, e.g., lithium, sodium, potassium, rubidium, cesium, or francium, which may exist in a cationic or neutral state.

In describing a numerical range in the present specification, the term "X to Y" means X or more and Y or less ($X \leq$ and $\leq Y$).

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

A pouch-type rechargeable lithium battery according to one example embodiment includes an electrode assembly including a negative electrode plate, a positive electrode plate, and a separator interposed between the negative electrode plate and the positive electrode plate; and an electrolyte into which the electrode assembly is impregnated, wherein the separator includes a porous substrate; and a coating layer disposed on at least one surface of the porous substrate, the coating layer includes a binder; and a filler. The binder includes a (meth)acrylic binder including a first structural unit derived from (meth)acrylic acid, (meth)acrylate, or a salt thereof, a second structural unit derived from a hydroxyalkyl (meth)acrylate, and a third structural unit derived from (meth)acrylamidosulfonic acid or a salt thereof. A

volume range of ethyl propionate (EP) is based on 100% by volume of the non-aqueous organic solvent of the electrolyte. When EP is present in an amount in a range of 10% by volume to 40% by volume in the non-aqueous organic solvent of the electrolyte, the adhesive strength to the separator/electrode plate may be improved. In addition, EP in an amount in a range of 10% by volume to 30% by volume in the non-aqueous organic solvent of the electrolyte may be said to be the improved or optimal condition.

According to one example embodiment, the composition of the non-aqueous organic solvent in the electrolyte is composed of or include at least one of ethylene carbonate (EC), propylene carbonate (PC), ethyl propionate (EP), and propyl propionate (PP).

According to one example embodiment, the electrolyte composition may be composed of or include a lithium salt (1.3 M $LiPF_6$), non-aqueous organic solvents EC/PC/EP/PP (10/15/30/45% by volume), and additives, for example, 7% by volume of fluoroethylene carbonate (FEC), 1% by volume of vinyl ethylene carbonate (VEC), and 3% by volume of propylene sulfone (PS). The contents of the additives may be based on 100% by volume of the non-aqueous organic solvent.

The separator may have low film resistance, thereby improving the capacity of a rechargeable lithium battery.

According to one example embodiment, the separator may have a film resistance of 1.2 Ω or less.

The separator has significantly high wet adhesive strength to the positive or negative electrode in the electrolyte and significantly low thermal shrinkage in the electrolyte, thereby enhancing the reliability of the rechargeable lithium battery.

A pouch-type battery including the separator but having an electrolyte other than the above electrolyte may present a challenge in that the separator cannot exhibit sufficient wet adhesive strength. A pouch-type battery including the electrolyte but having a separator that does not satisfy the same requirements as the above separator may present challenges the separator with lifespan and safety due to high film resistance or high heat shrinkage in the electrolyte.

According to one example embodiment, the separator may have a thermal shrinkage in the electrolyte of 25% or less in a machine direction (MD) and 25% or less in a transverse direction (TD). The above-mentioned "MD" and "TD" are the same directions as the MD and TD of the porous substrate, respectively.

The separator may have a wet adhesive strength of 0.5 gf/mm or more.

A separator having a coating layer formed of or including a composition for a coating layer that does not include the (meth)acrylic binder, or contains a binder other than the (meth)acrylic binder, may present a challenge of not having electrolyte shrinkage or film resistance characteristics suitable for cell manufacturing.

According to one example embodiment, the (meth)acrylic binder may be included in an amount of 95% by weight or more, for example, in a range of 98% by weight to 100% by weight, or 100% by weight, of the total binder (e.g., non-adhesive binder) in the composition.

FIG. 1 is a cross-sectional view schematically showing a pouch-type rechargeable lithium battery according to one example embodiment.

Referring to FIG. 1, the pouch-type rechargeable battery 100 may include an electrode assembly 110, and a pouch 130 configured to accommodate the electrode assembly 110.

The electrode assembly 110 may be formed by winding or laminating a laminate of a first electrode plate 112, a separator 116, and a second electrode plate 114 formed in a thin plate or film shape.

When the electrode assembly 110 is a wound laminate, the winding axis may be parallel to the longitudinal direction of a sealing portion 132. Also, the electrode assembly may be in a stacked type rather than a wound type, and the shape of the electrode assembly is not limited in the present disclosure.

Also, the electrode assembly 110 may be a Z-stack electrode assembly in which positive and negative electrode plates are inserted on both sides of a separator folded in a Z-stack.

In addition, the electrode assembly 110 may be accommodated in the sealing portion 132 by stacking one or more electrode assemblies so that their long sides are adjacent to each other, and the number of electrode assemblies is not limited in the present disclosure.

The electrode assembly 110 is impregnated into the electrolyte 120 contained within the pouch 130.

Since the pouch-type rechargeable lithium battery has the low film resistance, low heat shrinkage in the electrolyte, and high wet adhesive strength provided by the separator and the electrolyte, the separator and the electrolyte are described in detail first.

**Separator:**

The separator includes the above-described coating layer.

The binder includes a (meth)acrylic binder including a first structural unit derived from (meth)acrylic acid, (meth) acrylate, or a salt thereof, a second structural unit derived from a hydroxyalkyl (meth)acrylate, and a third structural unit derived from (meth)acrylamidosulfonic acid or a salt thereof.

According to one example embodiment, the (meth)acrylic binder may be or include a non-adhesive binder.

The (meth)acrylic binder may fix the filler onto a porous substrate and enable the coating layer to adhere to the porous substrate and the electrode plate, and may contribute to improving the heat resistance, air permeability, and oxidation resistance of the separator. Also, the (meth)acrylic binder may facilitate the movement of lithium ions to lower film resistance and improve ion conductivity, increase the adhesive strength of the coating layer to the porous substrate and the electrode plate, and enhance the dispersibility of the filler within the coating layer. In addition, the (meth)acrylic binder may provide a separator having low film resistance in a coating layer including the filler that is described below.

With respect to 100 mol% of the (meth)acrylic binder, the first structural unit, the second structural unit and the third structural unit may be included in a total of 95 mol% or more, for example, a range of 95 mol% to 100 mol%, for example, 100 mol%. In the above range, the above-described effect of the separator may be readily achieved.

The first structural unit is derived from (meth)acrylic acid, (meth)acrylate, or a salt thereof, and thus may fix the filler onto the porous substrate, while providing adhesive strength so that the coating layer can be attached to the porous substrate and the electrode plate, and may contribute to improving the heat resistance and air permeability of the separator. Also, the first structural unit may improve the dispersibility of the coating slurry by having a carboxyl functional group (-C(=O)O-) in the structural unit.

The first structural unit may be represented by any one of the following Chemical Formulas 1 to 3:

Chemical Formula 1:

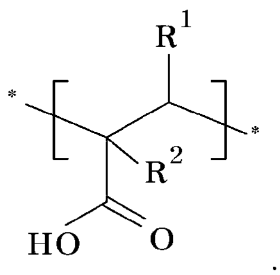

Chemical Formula 2:

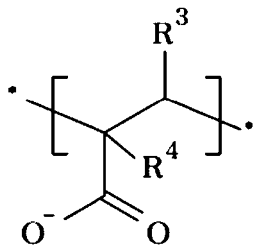

Chemical Formula 3:

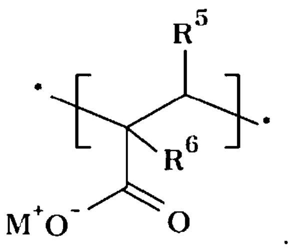

The first structural unit may be included in an amount in a range of 20 mol% to 75 mol%, for example, 20,21,22,23,24,25,26,27,28,29,30,31,32,33,34,35,36,37,38,39,40,41,42,43,44,45,46,47,48, 49,50,51,52,53,54,55,56,57,58,59,60,61,62,63,64,65,66,67,68,69,70,71,72,73,74,75 mol%, 25 mol% to 70 mol%, 30 mol% to 65 mol%, 30 mol% to 60 mol%, or 40 mol% to 65 mol%, based on 100 mol% of the binder for a rechargeable lithium battery. When the first structural unit is included in the above range, the separator may exhibit low film resistance, desired or improved adhesive strength to the porous substrate and the electrode plate, heat resistance, air permeability, and oxidation resistance.

According to one example embodiment, the first structural unit may include a structural unit represented by Chemical Formula 2 and a structural unit represented by Chemical Formula 3. In this case, the structural unit represented by Chemical Formula 2 and the structural unit represented by Chemical Formula 3 may be included in a molar ratio in a range of 10:1 to 1:2, or 10:1 to 1:1, or 5:1 to 1:1.

According to another example embodiment, the first structural unit may include only a structural unit represented by Chemical Formula 2.

The second structural unit is derived from a hydroxyalkyl (meth)acrylate, and thus may fix the filler onto the porous substrate while providing adhesive strength so that the first layer can be attached to the porous substrate and the second layer. Also, the second structural unit may improve the dispersibility of the coating slurry by having a carboxyl functional group (-C(=O)O-) in the structural unit.

The second structural unit may be represented by the following Chemical Formula 4:

Chemical Formula 4:

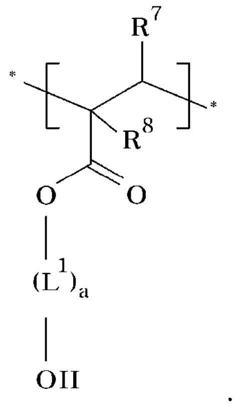

The second structural unit may be included in an amount in a range of 1 mol% to 20 mol%, for example, 1,2,3,4,5,6,7,8,9,10,11,12,13,14,15,16,17,18,19,20 mol%, 2 mol% to 15 mol%, or 5 mol% to 15 mol%, based on 100 mol% of the binder for a rechargeable lithium battery. In the above range, the second structural unit may readily increase the adhesive strength of the coating layer to the porous substrate and electrode plate.

The second structural unit may be, for example, a structural unit derived from a hydroxyalkyl (meth)acrylate. Here, the alkyl may be or include a C1 to C20 alkyl, a C1 to C10 alkyl, or a C1 to C6 alkyl.

The hydroxyalkyl (meth)acrylate may include, for example, at least one of hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth) acrylate, and 6-hydroxyhexyl (meth)acrylate.

The third structural unit derived from the (meth)acrylamidosulfonic acid or a salt thereof may lower the film resistance of the separator by increasing the mobility of lithium ions in the presence of the first structural unit and the second structural unit.

The third structural unit may enhance the heat resistance of the separator due to the effect of increasing the glass transition temperature by including a bulky functional group derived from (meth)acrylamidosulfonic acid or a salt thereof. In addition, when the third structural unit includes a functional group derived from a salt of (meth)acrylamidosulfonic acid, a metal (M) may move through the third structural unit by the sulfonic acid functional group substituted with the metal (M), thereby exhibiting the effect of lowering the film resistance.

The third structural unit may be represented by at least one of the following Chemical Formula 5, 6, or 7, or a combination thereof:

Chemical Formula 5:

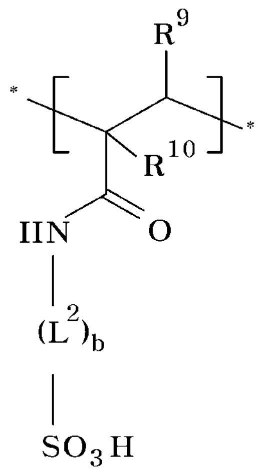

.

Chemical Formula 6:

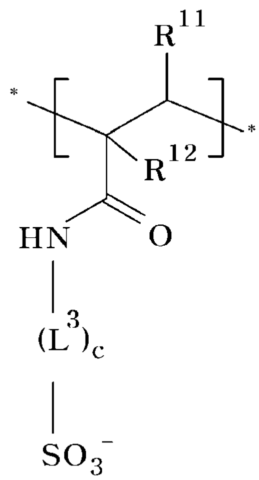

.

Chemical Formula 7:

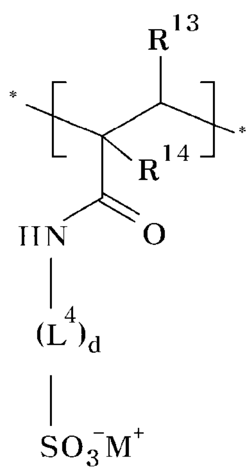

.

The third structural unit may include only one, or two or more types, of the structural unit represented by Chemical Formula 5, the structural unit represented by Chemical Formula 6, and the structural unit represented by Chemical

Formula 7, or may include two or more types. As an example, the third structural unit may include the structural unit represented by Chemical Formula 6. As another example, the third structural unit may include the structural unit represented by Chemical Formula 6 and the structural unit represented by Chemical Formula 7.

The third structural unit may be or include, for example, a structural unit derived from a (meth)acrylamidoalkane sulfonic acid or a salt thereof. Here, the alkane may be or include a C1 to C20 alkane, a C1 to C10 alkane, or a C1 to C6 alkane, and the alkyl may be or include a C1 to C20 alkyl, a C1 to C10 alkyl, or a C1 to C6 alkyl. The salt is composed of or include the above-mentioned sulfonic acid and a suitable ion. The ion may be or include, for example, an alkali metal ion. In this case, the salt may be or include a sulfonic acid alkali metal salt.

For example, the (meth)acrylamidoalkane sulfonic acid may be 2-(meth)acrylamido-2-methylpropane sulfonic acid.

The third structural unit may be included in the (meth)acrylic binder in an amount in a range of 20 mol% to 75 mol%, for example, 20,21,22,23,24,25,26,27,28,29,30,31,32,33,34,35,36,37,38,39,40,41,42,43,44,45,46,47,48,49,50,51,52,53,54,55,56,57,58,59,60,61,62,63,64,65,66,67,68,69,70,71,72,73,74,75 mol%, 25 mol% to 70 mol%, 20 mol% to 65 mol%, 30 mol% to 65 mol%, or 30 mol% to 60 mol%. When the third structural unit is included in the above range, the (meth)acrylic binder and the separator including the same may exhibit significantly low film resistance.

Chemical Formulas 1 to 7 above are now described.

$R^1$ to $R^{14}$ may each independently be or include hydrogen or a C1 to C10 alkyl group. For example, $R^1$ to $R^7$ and $R^9$ to $R^{14}$ may each be or include hydrogen or a methyl group; $R^8$ may be or include a methyl group.

$L^1$ to $L^4$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be or include a methylene group or an ethylene group; $L^2$ to $L^4$ may each independently be or include $*-C(CH_3)_2-CH_2-*$.

a, b, c, and d may each independently be an integer ranging from 0 to 2. For example, a, b, c, and d may all be equal to 1.

M may be or include an alkali metal, and the alkali metal may be or include at least one of lithium, sodium, potassium, rubidium, or cesium. For example, M may be lithium or sodium.

A representative example of the binder for a rechargeable lithium battery according to one example embodiment is represented by the following Chemical Formula 8:

Chemical Formula 8:

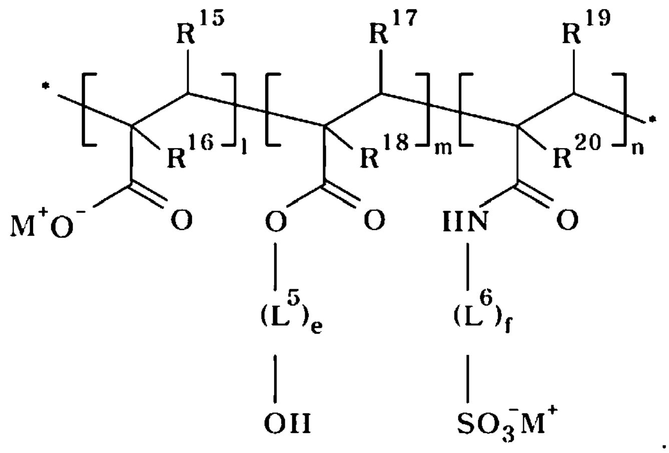

Chemical Formula 8 is now described.

$R^{15}$ to $R^{20}$ may each independently be or include hydrogen or a C1 to C10 alkyl group. For example, $R^{15}$ to $R^{17}$, $R^{19}$, and $R^{20}$ may each be or include hydrogen or a methyl group; and $R^{18}$ may be or include a methyl group.

$L^5$ and $L^6$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be or include a methylene group or an ethylene group; and $L^6$ may be or include $*-C(CH_3)_2-CH_2-*$.

M may be or include an alkali metal, and the alkali metal may be or include at least one of lithium, sodium, potassium, rubidium, or cesium. For example, M may be lithium or sodium.

l, m, and n are the molar ratios of the respective units, provided that the sum of l, m, and n is 1. For example, $0.20 \le l \le 0.75$, $0.01 \le m \le 0.2$, and $0.2 \le n \le 0.75$ may be true, for example $0.25 \le 1 \le 0.70$, $0.01 \le m \le 0.15$, and $0.25 \le n \le 0.75$; or $0.3 \le l \le 0.65$, $0.05 \le m \le 0.15$, and $0.3 \le n \le 0.65$.

e and f may each independently be an integer ranging from 0 to 2. For example, e and f may all be equal to 1.

The (meth)acrylic binder may include an alkali metal. The alkali metal may exist in the form of a cation, and may be, for example, lithium, sodium, potassium, rubidium, or cesium. For example, the alkali metal may exist in the form of a salt bound to the (meth)acrylic binder. The alkali metal may assist in the synthesis of the (meth)acrylic binder in an aqueous solvent, may enhance the adhesive strength of a coating layer, and may improve the heat resistance, air permeability, and oxidation resistance of the separator.

The alkali metal may be included in an amount in a range of 1% by weight to 40% by weight, for example, 1% by weight to 30% by weight, 1% by weight to 20% by weight, or 10% by weight to 20% by weight of the alkali metal and the (meth)acrylic binder. For example, the (meth)acrylic binder and the alkali metal may be included in a weight ratio in a range of 99:1 to 60:40, or a weight ratio in a range of 99:1 to 70:30, for example, a weight ratio in a range of 99:1 to 80:20, for example, a weight ratio in a range of 90:10 to 80:20.

The alkali metal may be included in an amount in a range of 0.1 mol% to 1.0 mol% based on the total content of the alkali metal and the (meth)acrylic binder. When the alkali metal is included in the above range, the coating layer may have desired or improved adhesive strength, and a separator including the coating layer may exhibit desired or improved heat resistance, air permeability, and oxidation resistance.

The (meth)acrylic binder may have various forms, such as an alternating polymer in which the structural units are alternately distributed, a random polymer in which the structural units are randomly distributed, and a graft polymer in which some of the structural units are grafted.

The (meth)acrylic binder may have a weight average molecular weight in a range of 100,000 g/mol to 1,000,000 g/mol, 100,000 g/mol to 500,000 g/mol, 100,000 g/mol to 150,000 g/mol, 130,000 g/mol to 200,000 g/mol, or 300,000 g/mol to 900,000 g/mol. When the weight average molecular weight of the (meth)acrylic binder satisfies the above range, desired or improved adhesive strength and low resistance may be exhibited. The weight average molecular weight may be a polystyrene-converted average molecular weight measured using gel permeation chromatography.

The (meth)acrylic binder may be manufactured by a solution polymerization method.

According to one example embodiment, the (meth)acrylic binder may be included in the coating layer of the separator in a film form.

The filler may have a particle size (D50) in a range of 0.4 μm or less. In the above range, when the filler is combined with the (meth)acrylic binder and the crosslinking agent, it may be possible to reach the shrinkage in the electrolyte. For example, the filler may have a particle size (D50) of 0.35 μm or less, 0.3 μm or less, or a range of 0.1 μm to 0.3 μm. In the above range, there may be an effect of improving heat resistance characteristics.

According to one example embodiment, the filler having a particle size (D50) of 0.4 μm or less may be included in an amount of 95% by weight or more, for example in a range of 95% by weight to 100% by weight, 98% by weight to 100% by weight, or 100% by weight, based on the total amount of the filler in the first layer. In the above range, the effect of the separator of the present disclosure may be readily achieved.

According to one example embodiment, the filler may or may not be surface-modified.

The filler may be or include, for example, an inorganic filler, an organic filler, an organic-inorganic composite filler, or a combination thereof. The inorganic filler may be or include a ceramic material capable of improving heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but the present disclosure is not limited thereto. The organic filler may include at least one of an acrylic compound, an imide compound, an amide compound, or a combination thereof, but the present disclosure is not limited thereto. The organic filler may have a core-shell structure, but the present disclosure is not limited thereto. For example, the filler may be boehmite.

The filler may be in a spherical, platy, cubic, or amorphous shape. Preferably, the filler may be in a cubic shape, and the cubic shape may significantly lower the shrinkage as described above.

The filler should be included in a desired amount with respect to the binder, for example, the (meth)acrylic binder. According to one example embodiment, the (meth)acrylic binder and the filler may be included in a mass ratio in a range of 1:10 to 1:50, for example, 1:10, 1:15, 1:20, 1:25, 1:30, 1:35, 1:40, 1:45, 1:50, a mass ratio in a range of 1:10 to 1:40, or in a range of 1:20 to 1:30. In the above range, there may be an effect of improving heat resistance characteristics in the electrolyte.

The filler may be included in an amount in a range of 50% by weight to 99% by weight, for example, 70% by weight to 99% by weight, for example, 75% by weight to 99% by weight, for example, 80% by weight to 99% by weight, for example, 85% by weight to 99% by weight, for example, 90% by weight to 99% by weight, for example, 95% by weight to 99% by weight, based on the total amount of the coating layer. When the filler is included in the above range, desired or improved heat resistance, durability, oxidation resistance, and stability may be exhibited.

Each of the coating layers may have a thickness in a range of 0.01 μm to 20 μm. Within the above range, the coating layer may have a thickness of 0.01 μm to 7 μm, 0.1 μm to 5 μm, or 1 μm to 3 μm.

The ratio of the thickness of the entire coating layer to the thickness of the porous substrate may be in the range of 0.01 to 0.7, for example, in the range of 0.01 to 0.5, or 0.01 to 0.4, or 0.01 to 0.3. In the above range, the separator may exhibit desired or improved air permeability, heat resistance, adhesive strength, and the like.

**Porous substrate:**

The porous substrate may be or include a substrate having a plurality of pores that is typically used in electrochemical devices. Non-limiting examples of the porous substrate may be or include a polymer film formed of or including any one polymer such as or including at least one of polyolefins such as polyethylene, polypropylene, and the like, polyesters such as polyethylene terephthalate, polybutylene terephthalate, polyethylene naphthalate, and the like, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, glass fibers, Teflon, and polytetrafluoroethylene, or a copolymer or mixture of two or more thereof.

The porous substrate may be or include, for example, a polyolefin-based substrate including a polyolefin, and the polyolefin-based substrate may have a desired or improved shutdown function, and thus may contribute to improving the safety of the battery. The polyolefin-based substrate may be or include at least one of, for example, at least one of a polyethylene single film, a polypropylene single film, a polyethylene/polypropylene double film, a polypropylene/polyethylene/polypropylene triple film, and a polyethylene/polypropylene/polyethylene triple film. Also, the polyolefin-based resin may include a non-olefin resin in addition to an olefin resin, or may include a copolymer of an olefin and a non-olefin monomer.

The porous substrate may have a thickness in a range of 1 μm to 40 μm, for example, a thickness of 1 μm to 30 μm, 1 μm to 20 μm, or 5 μm to 15 μm.

A separator for a rechargeable battery according to one example embodiment may be manufactured by applying a composition for forming a coating layer on one side, or on both sides, of a porous substrate, and then drying the composition. The drying may be performed using a conventional method known to those skilled in the art.

FIG. 2 is a cross-sectional view showing a separator for a rechargeable lithium battery according to one example embodiment.

Referring to FIG. 2, the separator for a rechargeable lithium battery includes a porous substrate 1, and a coating layer 2 disposed on both sides of the porous substrate 1. The coating layer 2 may include a filler 3 and a (meth)acrylic binder 4.

**Electrolyte**

According to one example embodiment, an electrolyte composition may be composed of or include a lithium salt (1.3 M $LiPF_6$), non-aqueous organic solvents EC/PC/EP/PP (10/15/30/45% by volume), and additives, for example, 7% by volume of fluoroethylene carbonate (FEC), 1% by volume of vinyl ethylene carbonate (VEC), and 3% by volume of propylene sulfone (PS).

The electrolyte includes a lithium salt and a non-aqueous organic solvent.

The electrolyte may further include an additive.

The ethyl propionate (EP) content in the non-aqueous organic solvent is in a range of 10% by volume to 40% by volume. When the EP content is less than 10% by volume, the wet adhesive strength to the positive or negative electrode may be poor, the thermal shrinkage may be high, and the film resistance may be high. When the EP content is more than 40% by volume, the wet adhesive strength to the positive or negative electrode may be poor, and the thermal shrinkage may be high. For example, the EP content in the non-aqueous organic solvent may be in a range of 10% by volume to 30% by volume, for example, 30% by volume.

The non-aqueous organic solvent may further include at least one of ethylene carbonate (EC), propylene carbonate (PC), and propyl propionate (PP) in addition to EP. EC, PC, and PP may further enhance the effect of the separator in the pouch-type battery.

According to one example embodiment, the non-aqueous organic solvent may be EC:PC:EP:PP in a ratio in a range of 5 to 30:5 to 30:10 to 30:45 to 65% by volume. According to one example embodiment, the volume ratio may be based on 100% by volume of the total volume.

According to one example embodiment, the non-aqueous organic solvent may be EC:PC:EP:PP in a ratio in a range of 10:15:10 to 30:45 to 65% by volume, for example 10:15:30:45% by volume. According to one example embodiment, the volume ratio may be based on 100% by volume of the total volume.

According to one example embodiment, the total content of EP, EC, PC, and PP in the non-aqueous organic solvent may be 60% by volume or more, for example, in a range of 60% by volume to 90% by volume, 70% by volume to 90% by volume, 70% by volume, 95% by volume or more, for example, 95% by volume to 100% by volume, or 100% by volume.

The lithium salt dissolves in an organic solvent and constitutes a source of lithium ions within the battery, enabling the basic operation of a rechargeable lithium battery and promoting the movement of lithium ions between the positive and negative electrodes. Representative examples of the lithium salt may include one or more of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI), $LiC_4F_9SO_3$, $LiN(C_xF_{2x+1}SO_2)(C_yF_{2y+1}SO_2)$ (where x and y are integers in a range from 1 to 20), lithium trifluoromethane sulfonate, lithium tetrafluoroethane sulfonate, lithium difluorobis(oxalato)phosphate (LiDFOB), and lithium bis(oxalato) borate (LiBOB).

The lithium salt may be included in the electrolyte in an amount in a range of 0.1 M to 2.0 M, for example, 0.5 M to 1.5 M, for example, 1.0 M to 1.7 M.

The additive may include at least one of fluoroethylene carbonate (FEC), vinyl ethylene carbonate (VEC), and propylene sulfone (PS).

In one example embodiment, the FEC may be included in an amount in a range of 5% by volume to 10% by volume, for example, 7% by volume, the VEC may be included in an amount in a range of 0.1% by volume to 5% by volume, for example, 1% by volume, and the PS may be included in an amount in a range of 1% by volume to 5% by volume, for example, 3% by volume, based on 100% by volume of the non-aqueous organic solvent.

Referring again to FIG. 1, the first electrode plate 112 may include a first electrode active material portion to which a first electrode active material is applied, and a first electrode tab 112a electrically connected to a first non-coating portion, which is a region in which the first electrode active material is not applied. The first electrode tab 112a may be or include a passage for current flow between the first electrode plate 112 and a first current collector (not shown). In some examples, the first electrode tab 112a may be formed by cutting the first electrode plate in advance to protrude to one side when manufacturing the first electrode plate, and may protrude further toward one side than the separator without separate cutting.

The second electrode plate 114 may include a second electrode active material portion to which a second electrode active material is applied, and a second electrode tab 114a electrically connected to a second non-coating portion, which is a region in which the second electrode active material is not applied. The second electrode tab 114a may be or include a passage for current flow between the second electrode plate 114 and a second current collector (not shown). In some examples, the second electrode tab 114a may be formed by cutting the second electrode plate in advance to protrude toward the other side when manufacturing the second electrode plate, and may protrude further toward the other side than the separator without separate cutting.

In some examples, the first electrode tab 112a may be disposed on the left end side of the electrode assembly, and the second electrode tab 114a may be disposed on the right end side of the electrode assembly, or may also be disposed on one side in the same direction. Here, the terms "left" and "right" are for convenience of description based on the rechargeable battery shown in FIG. 1, and their positions may change when the rechargeable battery rotates left, right, up, or down.

The first electrode tab 112a and the second electrode tab 114a are electrically connected to the outside by welding to a negative electrode lead 152 and a positive electrode lead 154 of an external terminal, respectively. A tab film 156 for insulation from the pouch 130 is attached to the negative electrode lead 152 and the positive electrode lead 154. The negative electrode lead 152, the positive electrode lead 154, and the tab film 156 form an integral tab film 150.

A sealing portion 132 of the pouch 130 is made of or include a thermal bonding material, and has a structure in which sealing is achieved by bonding thermal bonding layers to each other. Since the thermal bonding material generally has weak adhesion to metals, a tab film 156 in the form of a thin film is attached to the tab so that the tab film 156 is bonded to the pouch 130.

The first electrode plate 112 of the electrode assembly 110 may constitute a negative electrode, and the second electrode plate 114 may constitute a positive electrode, or vice versa.

## Positive electrode

A positive electrode for a rechargeable lithium battery may include a current collector and a positive electrode active material layer formed on the current collector. The positive electrode active material layer includes a positive electrode active material and may further include a binder and/or a conductive material. As an example, the positive electrode may further include an additive that may constitute a sacrificial positive electrode.

A compound capable of reversible intercalation and deintercalation of lithium (a lithiated intercalation compound) may be used as the positive electrode active material. For example, at least one of composite oxides of lithium and a metal such as or including at least one of cobalt, manganese, nickel, and a combination thereof may be used.

The composite oxide may be or include a lithium transition metal composite oxide, and examples thereof include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following chemical formulas may be used: $Li_aA_{1-}$

${}_{b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 \le f \le 2$); $Li_aFePO_4$ ($0.90 \le a \le 1.8$).

In the chemical formula above, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

As an example, the positive electrode active material may be or include a high-nickel positive electrode active material in which the content of nickel is 80 mol% or more, 85 mol% or more, 90 mol% or more, 91 mol% or more, or 94 mol% or more, and 99 mol% or less, based on 100 mol% of the metals excluding lithium in the lithium transition metal composite oxide. The high-nickel positive electrode active material may exhibit high capacity, and thus may be applied to high-capacity, high-density rechargeable lithium batteries.

The content of the positive electrode active material may be in a range of 90% by weight to 99.5% by weight based on 100% by weight of the positive electrode active material layer, and the content of each of the binder and the conductive material may be in a range of 0.5% by weight to 5% by weight based on 100% by weight of the positive electrode active material layer.

The binder adheres positive electrode active material particles to each other, and adheres the positive electrode active material to the current collector. Representative examples of the binder include at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but the present disclosure is not limited thereto.

The conductive material may impart conductivity to the electrodes, and any material may be used as long as the material is electronically conductive without causing an adverse chemical change in the battery to be configured. Examples of the conductive material include carbon-based materials such as at least one of natural graphite, artificial graphite, carbon black, acetylene black, Ketjen black, carbon fibers, carbon nanofibers, carbon nanotubes, and the like; metal-based materials in the form of a metal powder or metal fibers containing at least one of copper, nickel, aluminum, silver, and the like; conductive polymers such as polyphenylene derivatives and the like; or a mixture thereof.

Al may be used as the current collector, but the present disclosure is not limited thereto.

## Negative electrode

A negative electrode for a rechargeable lithium battery includes a current collector and a negative electrode active material layer disposed on the current collector. The negative electrode active material layer includes a negative electrode active material, and may further include a binder and/or a conductive material.

For example, the negative electrode active material layer may include 90% by weight to 99% by weight of the negative electrode active material, 0.5% by weight to 5% by weight of the binder, and 0% by weight to 5% by weight of the conductive material.

The negative electrode active material includes at least one of a material capable of reversible intercalation/-deintercalation of lithium ions, a lithium metal, an alloy of lithium and a metal, a material capable of doping and dedoping lithium, or a transition metal oxide.

The material capable of reversible intercalation/deintercalation of lithium ions may include a carbon-based negative electrode active material, for example, crystalline carbon, amorphous carbon, or a combination thereof. Examples of the crystalline carbon include graphite such as natural graphite or artificial graphite in an amorphous, plate-like, flaky, spherical, or fibrous form, and examples of the amorphous carbon include at least one of soft carbon or hard carbon, mesophase pitch carbide, calcined coke, and the like.

As the alloy of lithium and a metal, an alloy of lithium and a metal such as or including at least one of Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be or include at least one of silicon, a silicon-carbon composite, $SiO_x$ ($0 < x < 2$), a Si-Q alloy (where Q is or includes at least one of an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to one

example embodiment, the silicon-carbon composite may be in the form of silicon particles which surfaces are coated with amorphous carbon. For example, the composite may include secondary particles (core) in which primary particles of silicon are assembled, and an amorphous carbon coating layer (shell) disposed on the surfaces of the secondary particles. The amorphous carbon may also be disposed between the primary particles of silicon, for example, so that the primary particles of silicon may be coated with amorphous carbon. The secondary particles may be present in a state in which the secondary particles are dispersed in an amorphous carbon matrix.

Also, the silicon-carbon composite may further include crystalline carbon. For example, the silicon-carbon composite may include a core containing crystalline carbon and silicon particles, and an amorphous carbon coating layer disposed on the surface of the core.

The Si-based negative electrode active material or the Sn-based negative electrode active material may be used in combination with the carbon-based negative electrode active material.

The binder adheres negative electrode active material particles to each other , and also adheres the negative electrode active material to the current collector. A non-aqueous binder, an aqueous binder, a dry binder, or a combination thereof may be used as the binder.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluorinated rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose-based compound capable of imparting viscosity may be further included. As the cellulose-based compound, at least one or more types of carboxymethyl cellulose, hydroxypropylmethyl cellulose, methyl cellulose, or an alkali metal salt thereof may be mixed and used. As the alkali metal, at least one of Na, K or Li may be used.

The dry binder is or includes a polymeric material capable of being fiberized, and may be or include, for example, at least one of polytetrafluoroethylene, polyvinylidene fluoride, a polyvinylidene fluoride-hexafluoropropylene copolymer, polyethylene oxide, or a combination thereof.

The conductive material may impart conductivity to the electrodes, and any material may be used as long as the conductive material is electronically conductive without causing an adverse chemical change in the battery to be configured. Examples thereof include carbon-based materials such as at least one of natural graphite, artificial graphite, carbon black, acetylene black, Ketjen black, carbon fibers, carbon nanofibers, carbon nanotubes, and the like; metal-based materials in the form of a metal powder or metal fibers containing at least one of copper, nickel, aluminum, silver, and the like; conductive polymers such as polyphenylene derivatives and the like; or a mixture thereof.

As the negative electrode current collector, any one or more of copper foil, nickel foil, stainless steel foil, titanium foil, nickel foam, copper foam, a polymer substrate coated with a conductive metal, and a combination thereof may be used.

In some examples, the first electrode tab 112a may be disposed on the left end side of the electrode assembly, and the second electrode tab 114a may be disposed on the right end side of the electrode assembly, or may also be disposed on one side in the same direction. Here, the terms "left" and "right" are for convenience of description based on the rechargeable battery shown in FIG. 2, and their positions may change when the rechargeable battery rotates left, right, up, or down.

The first electrode tab 112a and the second electrode tab 114a are electrically connected to the outside by welding to the negative electrode lead 152 and the positive electrode lead 154 of the external terminal, respectively. A tab film 156 for insulation from the pouch 130 is attached to the negative electrode lead 152 and the positive electrode lead 154. The negative electrode lead 152, the positive electrode lead 154, and the tab film 156 form an integral tab film 150.

A sealing portion 132 of the pouch 130 is made of or include a thermal bonding material, and has a structure in which sealing is achieved by bonding thermal bonding layers to each other. Since the thermal bonding material generally has weak adhesion to metals, a tab film 156 in the form of a thin film is attached to the tab so that the tab film 156 is bonded to the pouch 130.

Hereinafter, examples and comparative examples of the present disclosure are described. However, it should be understood that the following examples are only examples of the present disclosure, and are not intended to limit the present disclosure.

**Preparation Example 1**

To a 3 L four-necked separable flask equipped with a stirrer, a thermometer, and a condenser, 1249.72 g of

distilled water, a 20% aqueous lithium hydroxide solution (203.69 g), acrylic acid (AA, 0.3 mol), 2-hydroxyethyl methacrylate (HEMA, 0.10 mol), 2-acrylamido-2-methylpropanesulfonic acid (AMPS, 0.6 mol), and ammonium persulfate (0.001 mol) were added, and the internal pressure was reduced to 10 cmmHg with a diaphragm pump, and then returned to normal pressure with nitrogen. Then, this operation was repeated three times. A methacrylic binder was manufactured by reacting for 12 hours while controlling heating so that the temperature of the reaction solution was stabilized between 65° C and 70° C. After being cooled to room temperature, approximately 10 mL of the reaction solution was taken to measure non-volatile components (NV). As a result, the non-volatile components (NV) accounted for 9.8 wt% (theoretical value: 10 wt%). Also, in the methacrylic binder poly(acrylic acid-co-2-hydroxyethyl methacrylate-co-2-acrylamido-2-methylpropanesulfonic acid) lithium salt obtained herein, the molar ratio of the first structural unit derived from the acrylic acid lithium salt, the second structural unit derived from 2-hydroxyethyl methacrylate, and the third structural unit derived from 2-acrylamido-2-methylpropanesulfonic acid lithium salt is 30:10:60.

**Preparation Example 2**

Poly(acrylic acid lithium salt-co-2-hydroxyethyl methacrylate-co-2-acrylamido-2-methylpropanesulfonic acid lithium salt) was manufactured by changing the contents of the respective monomers used in Preparation Example 1. The molar ratio of acrylic acid lithium salt, 2-hydroxyethyl methacrylate, and 2-acrylamido-2-methylpropanesulfonic acid lithium salt was 40:10:50. Approximately 10 mL of the reaction solution (reaction product) was taken to measure non-volatile components. As a result, the non-volatile components accounted for 9.0 wt% (theoretical value: 10 wt%).

**Preparation Example 3**

Poly(acrylic acid lithium salt-co-2-hydroxyethyl methacrylate-co-2-acrylamido-2-methylpropanesulfonic acid lithium salt) was manufactured by changing the contents of the respective monomers used in Preparation Example 1. The molar ratio of the structural units derived from the acrylic acid lithium salt, 2-hydroxyethyl methacrylate, and 2-acrylamido-2-methylpropanesulfonic acid lithium salt, respectively, was 65:5:30. Approximately 10 mL of the reaction solution (reaction product) was taken to measure non-volatile components. As a result, the non-volatile components (NV) accounted for 9.0 wt% (theoretical value: 10 wt%).

**Preparation Example 4**

An acrylic copolymer was manufactured in the same manner as in Preparation Example 1, except that 2-hydroxyethyl methacrylate and 2-acrylamido-2-methylpropanesulfonic acid were used and acrylic acid was not used. The molar ratio of the structural unit derived from 2-hydroxyethyl methacrylate and the structural unit derived from 2-acrylamido-2-methylpropanesulfonic acid lithium salt was 74:26. The non-volatile components of the reaction solution accounted for 9.0 wt% (theoretical value: 10 wt%).

**Preparation Example 5**

An acrylic copolymer was manufactured in the same manner as in Preparation Example 1, except that acrylic acid and 2-acrylamido-2-methylpropanesulfonic acid were used and 2-hydroxyethyl methacrylate was not used. The molar ratio of the structural unit derived from acrylic acid and the structural unit derived from 2-acrylamido-2-methylpropanesulfonic acid lithium salt was 74:26. The non-volatile components of the reaction solution accounted for 9.0wt% (theoretical value: 10 wt%).

**Preparation Example 6**

An acrylic copolymer was manufactured in the same manner as in Preparation Example 1, except that acrylic acid and 2-hydroxyethyl methacrylate were used and 2-acrylamido-2-methylpropanesulfonic acid was not used. The molar ratio of the structural unit derived from acrylic acid lithium salt and the structural unit derived from 2-hydroxyethyl methacrylate was 42:58. The non-volatile components of the reaction solution accounted for 9.0 wt% (theoretical value: 10 wt%).

**Example 1**

Manufacture of separator:

The methacrylic binder (10% by weight in distilled water) manufactured in Preparation Example 1 and boehmite

(particle size (D50): 150 nm, cubic) as a filler were mixed at a methacrylic binder:filler mass ratio of 1:30 based on solid content, and added to a water solvent. Then, the resulting mixture was milled and dispersed using a bead mill at 25°C for 30 minutes to prepare a dispersion.

A composition for forming a coating layer was prepared by adding water to the dispersion so that the total solid content reached 20% by weight.

The composition for forming the coating layer was applied to a thickness of 3 μm on only one side of a polyethylene-based film (thickness: 8 μm, SK Corporation, air permeability: 120 sec/100 cc, puncture strength: 480 kgf) as a porous substrate using a die coating method, and then dried and aged in an oven at 70°C for 10 minutes to manufacture a separator.

Manufacture of negative electrode:

97% by weight of graphite particles having an average particle size of 25 μm as a negative electrode active material, 1.5% by weight of a styrene-butadiene rubber (SBR) binder, and 1.5% by weight of carboxymethyl cellulose (CMC) were mixed, and the resulting mixture was added to distilled water, and stirred for 60 minutes using a mechanical stirrer to prepare a slurry of a negative electrode active material. The slurry was applied onto a 10 μm-thick copper current collector using a doctor blade, dried in a hot air dryer at 100°C for 0.5 hour, dried again under vacuum at 120°C for 4 hours, and then roll-pressed to manufacture a negative electrode.

Manufacture of positive electrode:

97% by weight of $LiCoO_2$ as a positive electrode active material, 1.5% by weight of carbon black powder as a conductive material, and 1.5% by weight of polyvinylidene fluoride (PVdF) were mixed, and the resulting mixture was added to an N-methyl-2-pyrrolidone solvent, and then stirred for 30 minutes using a mechanical stirrer to prepare a slurry of positive electrode active material. The slurry was applied onto a 20 μm-thick aluminum current collector using a doctor blade, dried in a hot air dryer at 100°C for 0.5 hour, dried again under vacuum at 120°C for 4 hours, and then roll-pressed to manufacture a positive electrode.

One sheet of the separator was disposed between the positive electrode and the negative electrode to manufacture three sets of positive electrode-separator-negative electrode laminates, which were then placed in a pouch. The electrolyte composition, which was composed of 1.3 M $LiPF_6$ as a lithium salt; ethylene carbonate (EC)/propylene carbonate (PC)/ethyl propionate (EP)/propyl propionate (PP) (10/15/10/65% by volume) as non-aqueous organic solvents; and 7% by volume of fluoroethylene carbonate (FEC), 1% by volume of vinyl ethylene carbonate (VEC), and 3% by volume of propylene sulfone (PS) as additives based on a total of 100% by volume of the non-aqueous organic solvents, was injected so that the laminates were completely impregnated into the electrolyte to manufacture a pouch-type battery.

**Examples 2 to 4**

Pouch-type batteries were manufactured in the same manner as in Example 1, except that the composition of the pouch-type rechargeable battery was changed as shown in Table 1 below.

Comparative Examples 1 to 3

Pouch-type batteries were manufactured in the same manner as in Example 1, except that the composition of the pouch-type rechargeable battery was changed as shown in Table 1 below.

Comparative Example 4

A pouch-type battery was manufactured in the same manner as in Example 1, except that the non-aqueous organic solvents in the electrolyte used in Example 1 were changed as shown in Table 1 below.

**Comparative Example 5**

A pouch-type battery was manufactured in the same manner as in Example 1, except that the non-aqueous organic solvents in the electrolyte used in Example 1 were changed as shown in Table 1 below.

**Thermal shrinkage in electrolyte (unit: %)**

The manufactured pouch battery was sealed and left at 25°C for 12 hours. Thereafter, the pouch battery was left in an oven at 150°C for an hour. After the sample was taken out and cooled, the dimensions of the sides of the sample were measured to calculate the shrinkage. The shrinkage may be calculated according to the following Mathematical Formula 1.

Mathematical Formula 1:

$$\text{Shrinkage} = (L0-L1)/L0\times 100.$$

L0 represents the initial length of the separator, and L1 represents the length of the separator after it was left at 150 °C for an hour.

**Adhesive strength (unit: gf/mm, wet adhesive strength) of positive electrode**

The separator was attached to a positive electrode (manufactured in the same manner as for the battery), and inserted into a pouch. Thereafter, an electrolyte (prepared in the same manner as for the battery) was injected, left for 12 hours, pressed under the conditions of a pressure of 10 kgf/cm$^2$ to 20 kgf/cm$^2$, a temperature of 70°C to 90°C, and a duration of 5 seconds to 20 seconds, and then released. After the separator and the positive electrode were taken out of the pouch, the positive electrode and the separator were spread out 180°, and the force required to detach the positive electrode from the separator was measured using a tensile tester (HT400, Tinius Olsen).

**Film resistance (unit: Ω)**

The film resistance was evaluated by electrochemical impedance spectroscopy (EIS) resistance. Each of the separators manufactured in the examples and comparative examples was impregnated with an electrolyte (manufactured in the same manner as for the battery), fitted onto lead tab-laminated aluminum foil electrodes, and sealed in an aluminum pack to manufacture a test cell. Then, the resistance (Ω) of the test cell was measured at 20°C by the AC impedance method (measurement frequency: 100 kHz).

Table 1:

| | | Examples | | | | Comparative Examples | | | | |
|---|---|---|---|---|---|---|---|---|---|---|
| | | 1 | 2 | 3 | 4 | 1 | 2 | 3 | 4 | 5 |
| Binder | AA | 30 | 40 | 65 | 30 | 0 | 74 | 42 | 40 | 40 |
| | HEMA | 10 | 10 | 5 | 10 | 74 | 0 | 58 | 10 | 10 |
| | AMPS | 60 | 50 | 30 | 60 | 26 | 26 | 0 | 50 | 50 |
| Filler | D50 | 150 | 150 | 200 | 150 | 150 | 150 | 150 | 150 | 150 |
| | Weight ratio | 1:30 | 1:20 | 1:30 | 1:30 | 1:20 | 1:20 | 1:20 | 1:20 | 1:20 |
| Non-aqueous organic solvents in electrolyte | EC | 10 | 10 | 10 | 10 | 10 | 10 | 10 | 10 | 10 |
| | PC | 15 | 15 | 15 | 15 | 15 | 15 | 15 | 15 | 15 |
| | EP | 10 | 10 | 10 | 30 | 10 | 10 | 10 | 5 | 45 |
| | PP | 65 | 65 | 65 | 45 | 65 | 65 | 65 | 70 | 30 |
| EP content (% by volume) in non-aqueous organic solvent | | 10 | 10 | 10 | 30 | 10 | 10 | 10 | 5 | 45 |
| Thermal shrinkage (150 °C/1 hr) | MD (%) | 23.9 | 23.3 | 24.2 | 14.2 | 46.3 | 46.6 | 57.2 | 57.5 | 46.6 |
| | TD (%) | 24.2 | 23.6 | 24.6 | 13.2 | 46.4 | 46.9 | 57.0 | 58.6 | 46.3 |
| Wet adhesive strength (gf/mm) | | 0.54 | 0.53 | 0.58 | 0.82 | 0.38 | 0.36 | 0.32 | 0.35 | 0.42 |
| Film resistance (Ω) | | 0.96 | 1.11 | 1.03 | 0.80 | 1.12 | 1.16 | 1.24 | 1.19 | 1.36 |

As shown in Table 1 above, the pouch-type batteries of the Examples have low thermal shrinkage and film resistance in the electrolyte, and high wet adhesive strength to the positive or negative electrode, thereby enhancing the reliability of the batteries.

On the other hand, as shown in Table 1 above, the batteries of Comparative Examples 1 to 3 having a separator including no (meth)acrylic binder had high film resistance, low wet adhesive strength, and high thermal shrinkage. Comparative Examples 4 and 5, which had EP contents outside the range of the non-aqueous organic solvents in the electrolyte of this application, had high thermal shrinkage and low wet adhesive strength.

A pouch-type rechargeable lithium battery according to one example embodiment can have high reliability due to high wet adhesive strength to the positive or negative electrode and low thermal shrinkage and film resistance in the electrolyte.

## Claims

1. A pouch-type rechargeable lithium battery comprising:

   an electrode assembly (110) including a first electrode plate (112), a second electrode plate (114), and a separator (116) interposed between the first electrode plate (112) and the second electrode plate (114); and
   an electrolyte into which the electrode assembly (110) is impregnated,
   wherein the separator (116) includes a porous substrate (1) and a coating layer (2) disposed on at least one surface of the porous substrate (1),
   the coating layer (2) includes a binder and a filler (3), wherein the binder includes a (meth)acrylic binder (4) including a first structural unit derived from (meth)acrylic acid, (meth)acrylate, or a salt thereof, a second structural unit derived from a hydroxyalkyl (meth)acrylate, and a third structural unit derived from (meth)acrylamidosulfonic acid or a salt thereof, and
   the electrolyte (120) has an ethyl propionate content in a range of 10% by volume to 40% by volume in a non-aqueous organic solvent.

2. The pouch-type rechargeable lithium battery of claim 1, wherein the first structural unit is represented by at least one of Chemical Formula 1, 2 and 3, and a combination thereof:

Chemical Formula 1:

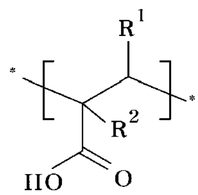

;

Chemical Formula 2:

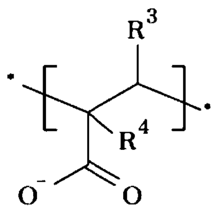

;

Chemical Formula 3:

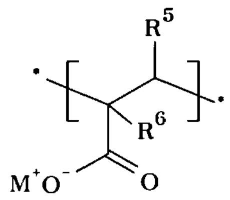

;

the second structural unit is represented by Chemical Formula 4:

Chemical Formula 4:

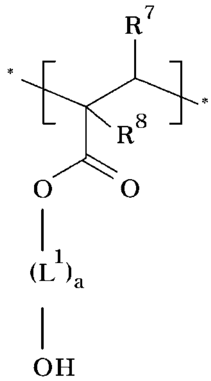

; and

the third structural unit is represented by at least one of Chemical Formula 5, 6, and 7, and a combination thereof:

Chemical Formula 5:

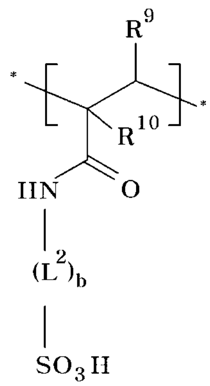

;

Chemical Formula 6:

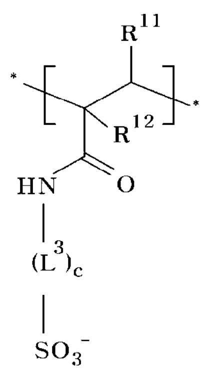

;

Chemical Formula 7:

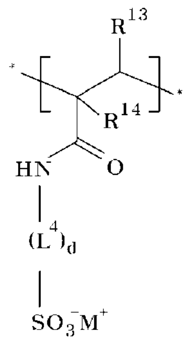

;

wherein $R^1$ to $R^{14}$ each independently comprises hydrogen or a C1 to C10 alkyl group,
$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, and d are each independently an integer ranging from 0 to 2, and
M comprises an alkali metal,
wherein the term "substituted" means that hydrogen in a compound is replaced with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br or I), a hydroxy group (-OH), a nitro group ($-NO_2$), a cyano group (-CN), an amino group (-NRR') (where R and R' are each independently hydrogen or a C1 to C6 alkyl group), a sulfobetaine group ($-RR'N^+(CH_2)_nSO_3^-$ where n is a natural number from 1 to 10), a carboxybetaine group ($-RR'N^+(CH_2)_nCOO^-$ where n is a natural number from 1 to 10) (where R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R where R is hydrogen, a C1 to C6 alkyl group, a C1 to C6 alkoxy group, or a C6 to C12 aryl group), a carboxyl group (-COOH) or a salt thereof (-C(=O)OM where M is an organic or inorganic cation), a sulfonate group ($-SO_3H$) or a salt thereof ($-SO_3M$ wherein M is an organic or inorganic cation), and a phosphate group ($-PO_3H_2$) or a salt thereof ($-PO_3MH$ or $-PO_3M_2$ where M is an organic or inorganic cation).

3. The pouch-type rechargeable lithium battery of claim 1, wherein the (meth)acrylic binder is represented by Chemical Formula 8:

Chemical Formula 8:

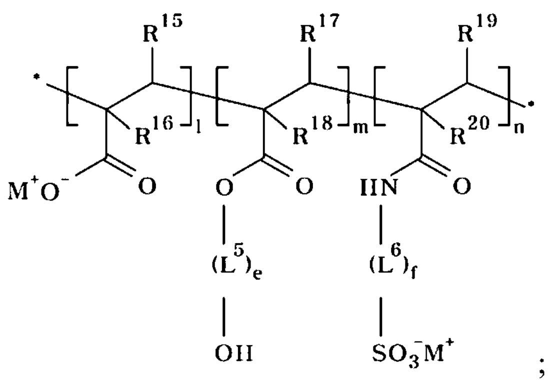

;

wherein:

$R^{15}$ to $R^{20}$ each independently comprises hydrogen or a C1 to C10 alkyl group,
$L^5$ and $L^6$ each independently comprises a substituted or unsubstituted C1 to C10 alkylene group, a substituted or

unsubstituted C3 to C20 cycloalkylene group, a substituted or unsubstituted C6 to C20 arylene group, or a substituted or unsubstituted C3 to C20 heterocyclic group,
M comprises an alkali metal, and
l, m, and n are the molar ratios of the respective units, provided that the sum of l, m, and n is 1,
e and f are each independently an integer ranging from 0 to 2,
wherein the term "substituted" means that hydrogen in a compound is replaced with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br or I), a hydroxy group (-OH), a nitro group ($-NO_2$), a cyano group (-CN), an amino group (-NRR') (where R and R' are each independently hydrogen or a C1 to C6 alkyl group), a sulfobetaine group ($-RR'N^+(CH_2)_nSO_3^-$ where n is a natural number from 1 to 10), a carboxybetaine group ($-RR'N^+(CH_2)_nCOO^-$ where n is a natural number from 1 to 10) (where R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R where R is hydrogen, a C1 to C6 alkyl group, a C1 to C6 alkoxy group, or a C6 to C12 aryl group), a carboxyl group (-COOH) or a salt thereof (-C(=O)OM where M is an organic or inorganic cation), a sulfonate group ($-SO_3H$) or a salt thereof ($-SO_3M$ wherein M is an organic or inorganic cation), and a phosphate group ($-PO_3H_2$) or a salt thereof ($-PO_3MH$ or $-PO_3M_2$ where M is an organic or inorganic cation).

4. The pouch-type rechargeable lithium battery of any one of the preceding claims, wherein:

the first structural unit is included in an amount in a range of 20 mol% to 75 mol%;
the second structural unit is included in an amount in a range of 1 mol% to 20 mol%; and
the third structural unit is included in an amount in a range of 20 mol% to 75 mol%, based on 100 mol% of the (meth)acrylic binder.

5. The pouch-type rechargeable lithium battery of any one of the preceding claims, wherein the sum of the first structural unit, the second structural unit, and the third structural unit is 95 mol% or more based on 100 mol% of the (meth)acrylic binder.

6. The pouch-type rechargeable lithium battery of any one of the preceding claims, wherein the filler (3) includes a filler having a particle size (D50) of 0.4 μm or less measured using a laser diffraction method.

7. The pouch-type rechargeable lithium battery of any one of the preceding claims, wherein the filler (3) is cubic and boehmite.

8. The pouch-type rechargeable lithium battery of any one of the preceding claims, wherein the (meth)acrylic binder and the filler are included in a mass ratio in a range of 1:10 to 1:50.

9. The pouch-type rechargeable lithium battery of any one of the preceding claims, wherein the non-aqueous organic solvent further comprises ethylene carbonate, EC, propylene carbonate, PC, and propyl propionate, PP.

10. The pouch-type rechargeable lithium battery of claim 9, wherein the non-aqueous organic solvent is EC:PC:EP:PP in a ratio in a range of 5 to 30:5 to 30:10 to 30:45 to 65% by volume.

11. The pouch-type rechargeable lithium battery of claim 9, wherein the non-aqueous organic solvent is EC:PC:EP:PP in a ratio in a range of 10:15:10 to 30:45 to 65% by volume.

12. The pouch-type rechargeable lithium battery any one of claims 9 to 11, wherein the electrolyte comprises a lithium salt and an additive.

13. The pouch-type rechargeable lithium battery of claim 12, wherein the additive includes 5% by volume to 10% by volume of fluoroethylene carbonate, FEC, 0.1% by volume to 5% by volume of vinyl ethylene carbonate, VEC, and 1% by volume to 5% by volume of propylene sulfone, PS, based on 100% by volume of the non-aqueous organic solvent.

14. The pouch-type rechargeable lithium battery of any one of the preceding claims, wherein the first electrode plate (112) is a negative electrode plate, and

the negative electrode plate comprises a carbon-based negative electrode active material.

**15.** The pouch-type rechargeable lithium battery of any one of the preceding claims, wherein the second electrode plate (114) is a positive electrode plate, and
the positive electrode plate comprises a positive electrode active material comprising at least one of a lithium nickel-based oxide, a lithium cobalt-based oxide, a lithium manganese-based oxide, a lithium iron phosphate-based compound, a cobalt-free nickel-manganese-based oxide, and a combination thereof.

FIG. 1

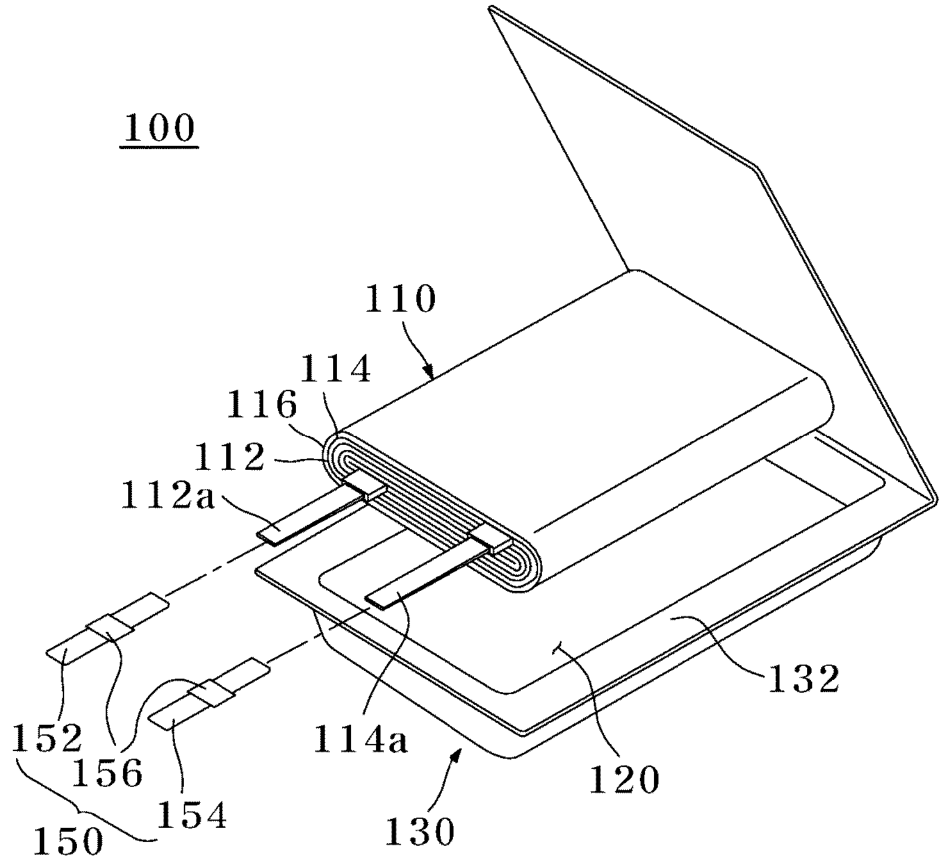


FIG. 2

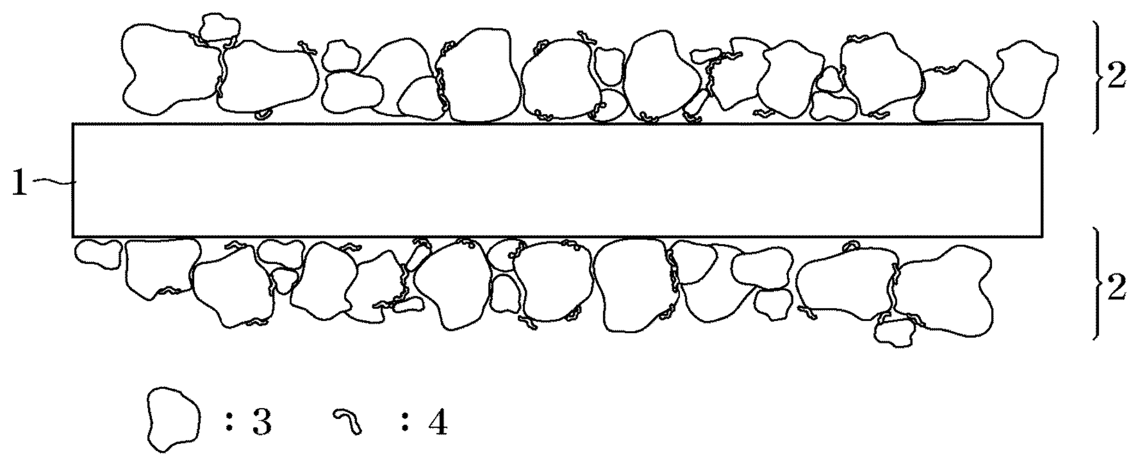

Europäisches Patentamt
European Patent Office
Office européen des brevets

# EUROPEAN SEARCH REPORT

Application Number
EP 25 21 5700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/219366 A1 (SAMSUNG SDI CO LTD [KR]) 16 November 2023 (2023-11-16)<br>* paragraphs [0007], [0069] - [0099], [0063], [0154] - [0166]; figures 1-4; example 1 *<br>& EP 4 525 183 A1 (SAMSUNG SDI CO LTD [KR]) 19 March 2025 (2025-03-19)<br>----- | 1-15 | INV.<br>H01M10/0567<br>H01M10/0569<br>H01M50/105<br>H01M50/42<br>H01M50/443<br>H01M50/446<br>H01M50/449 |
| X | US 2024/145866 A1 (KIM SOOHEE [KR] ET AL) 2 May 2024 (2024-05-02)<br>* paragraphs [0010] - [0018], [0040] - [0099], [0164] - [0168]; figures 1-3; example 1 *<br>----- | 1-15 | |
| X | KR 2023 0126985 A (SAMSUNG SDI CO LTD [KR]) 31 August 2023 (2023-08-31)<br>* paragraphs [0033] - [0090], [0164] - [0168]; figures 1-3 *<br>----- | 1-15 | |

TECHNICAL FIELDS SEARCHED (IPC)

H01M

The present search report has been drawn up for all claims

| Place of search | Date of completion of the search | Examiner |
|---|---|---|
| The Hague | 15 April 2026 | Bravo Diaz, Laura |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 21 5700

This annex lists the patent family members relating to the patent documents cited in the above-mentioned European search report. The members are as contained in the European Patent Office EDP file on
The European Patent Office is in no way liable for these particulars which are merely given for the purpose of information.

15-04-2026

| Patent document cited in search report | Publication date | Patent family member(s) | Publication date |
|---|---|---|---|
| WO 2023219366 A1 | 16-11-2023 | CN 119174045 A | 20-12-2024 |
| | | EP 4525183 A1 | 19-03-2025 |
| | | KR 20230157182 A | 16-11-2023 |
| | | US 2025329872 A1 | 23-10-2025 |
| | | WO 2023219366 A1 | 16-11-2023 |
| US 2024145866 A1 | 02-05-2024 | KR 20220155022 A | 22-11-2022 |
| | | US 2024145866 A1 | 02-05-2024 |
| | | US 20260058310 A1 | 26-02-2026 |
| | | WO 2022240227 A1 | 17-11-2022 |
| KR 20230126985 A | 31-08-2023 | NONE | |

EPO FORM P0459

For more details about this annex : see Official Journal of the European Patent Office, No. 12/82